# EUROPEAN PATENT APPLICATION

(11) **EP 4 848 264 A1**
(43) Date of publication of application: **02.12.2026**
(21) Application number: 25809997.7
(22) Date of filing: 07.03.2025
(51) Int. Cl.: G09G 3/20, G09G 5/00, G06F 3/14, G06F 3/01

(54) **ELECTRONIC DEVICE AND METHOD FOR CONTROLLING SAME**

(30) Priority: 08.05.2024 KR 20240060556
(71) Applicant: Samsung Electronics Co., Ltd., Suwon-si, Gyeonggi-do 16677 (KR)
(72) Inventor: LEE, Gwangho, Suwon-si Gyeonggi-do 16677 (KR); LEE, Joowon, Suwon-si Gyeonggi-do 16677 (KR)
(74) Representative: Appleyard Lees IP LLP
(86) International application number: PCT/KR2025/003052
(87) International publication number: WO 2025/234576

(57) **Abstract**

An electronic apparatus is disclosed. The electronic apparatus includes an interface connected to one display apparatus included in a display group, a memory configured to store center information to be applied to the display apparatus and luminance correction information according to a degree of separation from a center, and at least one processor configured to correct an image signal to be provided to the display apparatus based on the center information and the luminance correction information, and provide a corrected image signal to the display apparatus through the interface.

## Description

### Technical Field

The present disclosure relates to an electronic apparatus and a control method thereof, and more particularly, to an electronic apparatus for providing an image signal in which a luminance value is corrected to a display apparatus and a control method thereof.

### Background Art

Recently, various LED modular display systems have been developed. The LED modular display system may be implemented in a state in which a plurality of LED display apparatuses are physically connected, and may provide visual satisfaction to a user by displaying a high-resolution image through a large screen.

However, as the plurality of LED display apparatuses display the high-resolution image, the LED modular display system may consume a very large amount of power. Accordingly, a need for a technology capable of reducing power consumption of the LED modular display system has emerged.

### Disclosure of Invention

### Solution to Problem

An electronic apparatus according to one or more embodiments includes an interface connected to one display apparatus included in a display group, a memory configured to store center information to be applied to the display apparatus and luminance correction information according to a degree of separation from a center, and at least one processor configured to correct an image signal to be provided to the display apparatus based on the center information and the luminance correction information, and provide a corrected image signal to the display apparatus through the interface, and the at least one processor is configured to, based on shape information and overall resolution information of the display group being obtained, obtain the center information based on the shape information and the overall resolution information and store the center information in the memory, based on location information of the display apparatus being obtained, calculate, for each of a plurality of pixels included in the display apparatus, a degree of separation from the center based on the location information and the center information, identify a luminance correction value for each of the plurality of pixels based on the calculated degree of separation from the center and the luminance correction information, correct a luminance value included in the image signal to be provided to the display apparatus based on the luminance correction value to identify a corrected luminance value for each of the plurality of pixels, and provide the corrected image signal including the corrected luminance value to the display apparatus through the interface.

The at least one processor may be configured to, based on the shape information and the overall resolution information, generate a two-dimensional coordinate system having a position corresponding to a center point of the display group as an origin and having a pixel pitch as a unit length, identify coordinates of each of the plurality of pixels included in the display apparatus within the two-dimensional coordinate system based on location information of the display apparatus, and calculate, for each of the plurality of pixels, a degree of separation from the center based on the coordinates of each of the plurality of pixels.

The at least one processor may be configured to, based on the display group operating in a multi-view mode displaying a plurality of images, obtain location information and resolution information of at least one external display apparatus displaying, within the display group, the same image as an image displayed by the display apparatus, identify an overall shape of a display set (cluster) for displaying the one image based on the location information and the resolution information of the at least one external display apparatus, and obtain the center information based on the identified overall shape of the display set and store the center information in the memory.

The luminance correction information according to a degree of separation from the center may include information on a change rate of luminance correction values for respective regions within the display group, and the at least one processor may be configured to identify an overall shape of the display group based on shape information of the display group, identify a change rate of the luminance correction values for the respective regions corresponding to the overall shape, and store information on the identified change rate of the luminance correction values for the respective regions in the memory.

The at least one processor may be configured to, based on the overall shape of the display group being a rectangle having a horizontal length greater than a vertical length, set a change rate of luminance correction values in a horizontal direction to be smaller than a change rate of luminance correction values in a vertical direction.

The change rate of the luminance correction values in the horizontal direction may include information on a change in luminance correction values of pixels included between the center region and a horizontal edge region of the display group, and the change rate of the luminance correction values in the vertical direction may include information on a change in luminance correction values of pixels included between the center region and a vertical edge region of the display group.

The luminance correction information according to a degree of separation from the center may include luminance difference information.

The luminance difference information may include a ratio of a luminance correction value of an edge region of the display group to a luminance correction value of a center region of the display group, and the at least one processor may be configured to, based on information on current power consumption of the display group being obtained, compare the current power consumption with a preset power value, based on the current power consumption being less than the preset power value, set the ratio to be equal to or greater than a preset ratio value, and based on the current power consumption being equal to or greater than the preset power value, set the ratio to be less than the preset ratio value.

The at least one processor may be configured to, based on information on an occurrence position of a major event within an entire image displayed by the display group being obtained, obtain the center information based on the shape information and the information on the occurrence position of the major event and store the center information in the memory.

The at least one processor may be configured to, based on gaze tracking information of a user with respect to an entire image displayed by the display group being obtained, obtain the center information based on the shape information and the gaze tracking information and store the center information in the memory.

The luminance correction information may include a first luminance correction function in which the luminance correction value linearly decreases as a degree of separation from the center increases, and a second luminance correction function in which the luminance correction value non-linearly decreases as the degree of separation from the center increases.

The display apparatus may include a plurality of display modules, and each of the plurality of display modules may include a plurality of LED elements.

A control method of an electronic apparatus according to one or more embodiments includes, based on shape information and overall resolution information of the display group being obtained, obtaining center information to be applied to the display apparatus based on the shape information and the overall resolution information, based on location information of the display apparatus being obtained, calculating, for each of a plurality of pixels included in the display apparatus, a degree of separation from a center based on the location information and the center information, identifying a luminance correction value for each of the plurality of pixels based on the calculated degree of separation from the center and luminance correction information, correcting a luminance value included in an image signal to be provided to the display apparatus based on the luminance correction value to identify a corrected luminance value for each of the plurality of pixels, and providing an image signal in which the corrected luminance value is included to the display apparatus, and the luminance correction information may include information on a luminance correction value according to a degree of separation from the center.

The calculating a degree of separation from the center for each of the plurality of pixels may include,

based on the shape information and the overall resolution information, generating a two-dimensional coordinate system having a position corresponding to a center point of the display group as an origin and having a pixel pitch as a unit length, identifying coordinates of each of the plurality of pixels included in the display apparatus within the two-dimensional coordinate system based on location information of the display apparatus, and calculating, for each of the plurality of pixels, a degree of separation from the center based on the coordinates of each of the plurality of pixels.

The obtaining center information to be applied to the display apparatus may include, based on the display group operating in a multi-view mode displaying a plurality of images, obtaining location information and resolution information of at least one external display apparatus displaying, within the display group, the same image as an image displayed by the display apparatus, identifying an overall shape of a display set (cluster) for displaying the one image based on the location information and the resolution information of the at least one external display apparatus, and obtaining the center information based on the identified overall shape of the display set.

The luminance correction information may include information on a change rate of luminance correction values for respective regions within the display group, and the control method may include identifying an overall shape of the display group based on shape information of the display group, identifying a change rate of the luminance correction values for the respective regions corresponding to the overall shape, and storing information on the identified change rate of the luminance correction values for the respective regions.

The control method may include, based on the overall shape of the display group being a rectangle having a horizontal length greater than a vertical length, setting a change rate of luminance correction values in a horizontal direction to be smaller than a change rate of luminance correction values in a vertical direction, and the change rate of the luminance correction values in the horizontal direction may include information on a change in luminance correction values of pixels included between the center region and a horizontal edge region of the display group, and the change rate of the luminance correction values in the vertical direction may include information on a change in luminance correction values of pixels included between the center region and a vertical edge region of the display group.

The luminance correction information may include luminance difference information, the luminance difference information may include a ratio of a luminance correction value of an edge region of the display group to a luminance correction value of a center region of the display group, and the control method may include, based on information on current power consumption of the display group being obtained, comparing the current power consumption with a preset power value, based on the current power consumption being less than the preset power value, setting the ratio to be equal to or greater than a preset ratio value, and based on the current power consumption being equal to or greater than the preset power value, setting the ratio to be less than the preset ratio value.

The obtaining center information to be applied to the display apparatus may include, based on information on an occurrence position of a major event within an entire image displayed by the display group being obtained, obtaining the center information based on the shape information and the information on the occurrence position of the major event.

The obtaining center information to be applied to the display apparatus may include, based on gaze tracking information of a user with respect to an entire image displayed by the display group being obtained, obtaining the center information based on the shape information and the gaze tracking information.

In a computer-readable recording medium including a program that executes a control method of an electronic apparatus according to at least one embodiment, the control method of the electronic apparatus includes, based on shape information and overall resolution information of the display group being obtained, obtaining center information to be applied to the display apparatus based on the shape information and the overall resolution information, based on location information of the display apparatus being obtained, calculating, for each of a plurality of pixels included in the display apparatus, a degree of separation from a center based on the location information and the center information, identifying a luminance correction value for each of the plurality of pixels based on the calculated degree of separation from the center and luminance correction information, correcting a luminance value included in an image signal to be provided to the display apparatus based on the luminance correction value to identify a corrected luminance value for each of the plurality of pixels, and providing an image signal in which the corrected luminance value is included to the display apparatus, and the luminance correction information may include information on a luminance correction value according to a degree of separation from the center.

A display system according to at least one embodiment includes a plurality of display apparatuses and a plurality of electronic apparatuses connected to the plurality of display apparatuses, respectively, and configured to provide an image signal corresponding to a position of each of the plurality of display apparatuses to each of the display apparatuses, each of the plurality of electronic apparatuses may be configured to,

based on shape information and overall resolution information of the display group being obtained, obtain center information of the display group based on the shape information and the overall resolution information,

based on location information of each of the plurality of display apparatuses connected to each of the plurality of electronic apparatuses, respectively, being received, calculate, for each of a plurality of pixels included in each of the plurality of display apparatuses, a degree of separation from center based on the location information and the center information, identify a luminance correction value for each of the plurality of pixels based on the calculated degree of separation from the center and luminance correction information, correct a luminance value included in an image signal corresponding to a position of each of the plurality of display apparatuses based on the luminance correction value to identify a corrected luminance value for each of the plurality of pixels, and provide a corrected image signal including the corrected luminance value to each of the plurality of display apparatuses, the luminance correction information may include information on the luminance correction value according to a degree of separation from the center, each of the plurality of display apparatuses may include a plurality of display modules, and each of the plurality of display modules may include a plurality of LED elements and may be configured to generate a PWM signal corresponding to each of a plurality of pixels included in the plurality of display modules based on the corrected image signal received from each of the plurality of electronic apparatuses, and apply a voltage to the plurality of LED elements included in the plurality of pixels based on the generated PWM signal.

### Brief Description of Drawings

FIG. 1 is a view provided to explain an operation of a display system according to one or more embodiments;
FIG. 2 is a block diagram provided to explain a configuration of an electronic apparatus according to one or more embodiments;
FIG. 3 is a view provided to explain an operation of a display system according to one or more embodiments;
FIG. 4 is a view provided to explain a method of calculating a degree of separation from a center of an electronic apparatus according to one or more embodiments;
FIG. 5 is a view provided to explain a method of obtaining center information of an electronic apparatus according to one or more embodiments;
FIG. 6 is a view provided to explain a method of setting a luminance change rate of an electronic apparatus according to one or more embodiments;
FIG. 7 is a view provided to explain a method of setting a luminance correction function of an electronic apparatus according to one or more embodiments;
FIG. 8 is a view provided to explain a method of obtaining center information of an electronic apparatus according to one or more embodiments;
FIG. 9 is a view provided to explain a configuration of a display apparatus according to one or more embodiments;
FIG. 10 is a block diagram provided to explain a configuration of a display module according to one or more embodiments;
FIG. 11 is a flowchart provided to explain a method of providing a corrected image signal of an electronic apparatus according to one or more embodiments; and
FIG. 12 is a flowchart provided to explain a luminance correction method of an electronic apparatus according to one or more embodiments.

### Mode for the Invention

The present embodiments may be variously modified and have several embodiments, and specific embodiments of the present disclosure are thus illustrated in the accompanying drawings and described in detail in the specification. However, it should be understood that the scope of the present disclosure is not limited to specific embodiments, and includes all modifications, equivalents, and alternatives according to an embodiment of the present disclosure. In connection with descriptions of the drawings, similar reference numerals may be used for similar components.

In describing the present disclosure, when it is determined that a detailed description of a related known function or configuration may unnecessarily obscure the gist of the present disclosure, a detailed description thereof will be omitted.

In addition, the embodiments below may be modified into various different forms, and the scope of the technical idea of the present disclosure is not limited to the embodiments below. Rather, these embodiments are provided so that the present disclosure will be more thorough and complete, and to completely convey the technical idea of the present disclosure to those skilled in the art.

Terms used in the present disclosure are merely used to describe specific embodiments, and are not intended to limit the scope of rights. Singular expressions include plural expressions unless the context clearly indicates otherwise.

In the present disclosure, expressions such as "include," "may include," "have," or "may have" indicate the existence of a corresponding feature (e.g., a component such as a numerical value, function, operation, or part), and do not exclude the presence of an additional feature.

In the present disclosure, expressions such as "A or B," "at least one of A or/and B," or "one or more of A or/and B" may include all possible combinations of items listed together. For example, "A or B," "at least one of A and B," or "at least one of A or B" may indicate all of (1) including at least one A, (2) including at least one B, or (3) including both at least one A and at least one B.

In the present disclosure, expressions such as "first," "second," "firstly," or "secondly" may modify various components regardless of order and/or importance, and are merely used to distinguish one component from another component without limiting the corresponding components.

When a component (e.g., a first component) is referred to as being "(operatively or communicatively) coupled with/to" or "connected to" another component (e.g., a second component), it should be understood that the component may be directly connected to the other component, or connected through another component (e.g., a third component).

On the other hand, when a component (e.g., a first component) is referred to as being "directly connected to" or "directly coupled to" another component (e.g., a second component), it may be understood that another component (e.g., a third component) is not present between the component and the other component.

In the present disclosure, the expression "configured (or set) to" may be interchangeably used with, for example, "suitable for," "having the capacity to," "designed to," "adapted to," "made to," or "capable of" according to circumstances. The term "configured (or set) to" may not necessarily mean "specifically designed to" in hardware.

Instead, in some situations, the expression "an apparatus configured to" may mean that the apparatus is capable of performing a corresponding operation together with another device or component. For example, the phrase "a processor configured (or set) to perform A, B, and C" may mean a dedicated processor (e.g., an embedded processor) for performing the corresponding operations, or a generic-purpose processor (e.g., a CPU or an application processor) capable of performing the corresponding operations by executing one or more software programs stored in a memory device.

In the embodiments, a "module" or a "unit" performs at least one function or operation, and may be implemented as hardware or software, or as a combination of hardware and software. In addition, a plurality of "modules" or a plurality of "units" may be integrated into at least one module and implemented as at least one processor, except for a "module" or a "unit" that needs to be implemented as specific hardware.

Meanwhile, various elements and regions in the drawings are schematically illustrated. Accordingly, the technical idea of the present disclosure is not limited by relative sizes or spacing illustrated in the accompanying drawings.

Hereinafter, embodiments according to the present disclosure will be described in detail with reference to the accompanying drawings so that those skilled in the art to which the present disclosure pertains may easily carry out the present disclosure.

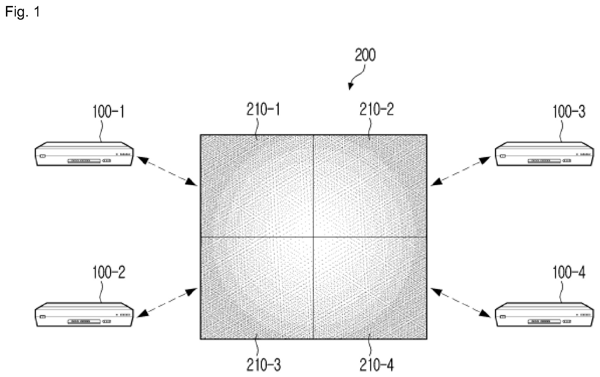

FIG. 1 is a view provided to explain an operation of a display system according to one or more embodiments.

Referring to FIG. 1, the display system may include a display group 200 including a plurality of electronic apparatuses 100-1, 100-2, 100-3, and 100-4 and a plurality of display apparatuses 210-1, 210-2, 210-3, and 210-4.

The display group 200 according to one or more embodiments of the present disclosure may include the plurality of display apparatuses 210-1, 210-2, 210-3, and 210-4. Each of the plurality of display apparatuses 210-1, 210-2, 210-3, and 210-4 may receive an image signal corresponding to a position of each of the plurality of display apparatuses 210-1, 210-2, 210-3, and 210-4 and display the received image signal.

As illustrated in FIG. 1, it is assumed that the display group 200 includes a first display apparatus 210-1, a second display apparatus 210-2, a third display apparatus 210-3, and a fourth display apparatus 210-4, the first display apparatus 210-1 is positioned in an upper right region, the second display apparatus 210-2 is positioned in an upper left region, the third display apparatus 210-3 is positioned in a lower right region, the fourth display apparatus 210-4 is positioned in a lower left region, and the display group 200 displays one image.

In this case, the first display apparatus 210-1 may receive and display an image signal corresponding to the upper right region among four-divided images, the second display apparatus 210-2 may receive and display an image signal corresponding to the upper left region among the four-divided images, the third display apparatus 210-3 may receive and display an image signal corresponding to the lower right region among the four-divided images, and the fourth display apparatus 210-4 may receive and display an image signal corresponding to the lower left region.

Each of the plurality of display apparatuses 210-1, 210-2, 210-3, and 210-4 according to one or more embodiments of the present disclosure may receive a corrected image signal from the plurality of electronic apparatuses 100-1, 100-2, 100-3, and 100-4 connected to the plurality of display apparatuses 210-1, 210-2, 210-3, and 210-4, respectively.

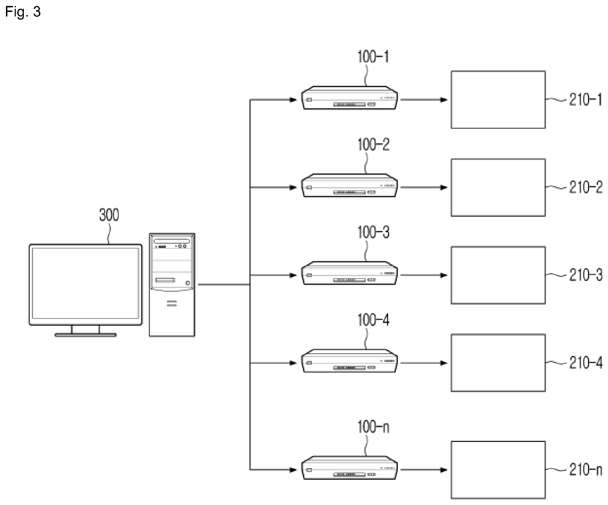

In the present disclosure, the "corrected image signal" may mean an image signal including a corrected luminance value. Specifically, each of the plurality of electronic apparatuses 100-1, 100-2, 100-3, and 100-4 may generate the "corrected image signal" by correcting luminance data included in an original image signal based on center information and luminance correction information to be applied to each of the plurality of display apparatuses 210-1, 210-2, 210-3, and 210-4. A specific method by which each of the plurality of electronic apparatuses 100-1, 100-2, 100-3, and 100-4 generates the corrected image signal will be described in detail later with reference to FIGS. 3 to 8.

Each of the plurality of display apparatuses 210-1, 210-2, 210-3, and 210-4 may display an image based on the corrected image signal, thereby displaying an image with a luminance value identical/similar to a luminance value of an original image at a center of the display group 200 while displaying an image with a luminance value relatively lower than the luminance value of the original image at an edge region of the display group 200.

In addition, the display group 200 may be replaced with and referred to by various expressions indicating the same/similar concept. For example, the display group 200 may be replaced with various expressions such as "digital signage apparatus," "modular display apparatus," "signage system," and "modular display system." However, in the present disclosure, the expression "display group 200" will be collectively used.

In addition, each of the plurality of display apparatuses 210-1, 210-2, 210-3, and 210-4 may be replaced with and referred to by various expressions indicating the same/similar concept. For example, the display apparatus may be replaced with the expression "display cabinet." However, in the present disclosure, the expression "display apparatus" will be collectively used.

In the present disclosure, the "edge region of the display group 200" may mean a region of pixels present at an edge portion of the display group 200. For example, when the display group 200 is a display having an 8K resolution (7680 × 4320 pixels), the "edge region of the display group 200" may include a region in which 7680 pixels adjacent to a horizontal bezel positioned at an upper portion of the display, 7680 pixels adjacent to a horizontal bezel positioned at a lower portion of the display, 4320 pixels adjacent to a vertical bezel positioned at a left portion of the display, and 4320 pixels adjacent to a vertical bezel positioned at a right portion of the display are positioned.

In addition, the "edge region" may be replaced with and referred to by various expressions indicating the same/similar concept. For example, the "edge region" may be replaced with various expressions such as "edge area," "corner pixel region," "edge pixel region," "border region," and "outer region." However, in the present disclosure, the expression "edge region" will be collectively used.

In FIG. 1, only a case in which the display group 200 includes 2 × 2 display apparatuses is illustrated, but this is merely one example, and the display group 200 may include n × m display apparatuses (where n and m are natural numbers equal to or greater than 2). In addition, in FIG. 1, only four electronic apparatuses 100-1, 100-2, 100-3, and 100-4 connected to four display apparatuses are illustrated, but this is merely one example, and the electronic apparatuses may be implemented as n × m electronic apparatuses (where n and m are natural numbers equal to or greater than 2).

In FIG. 1, the display group 200 is illustrated in a rectangular shape, but this is merely one example, and the display group 200 may be implemented in various shapes such as a rhombus shape, a square shape, and a shape including a curved surface according to a shape and arrangement of display apparatuses included in the display group 200.

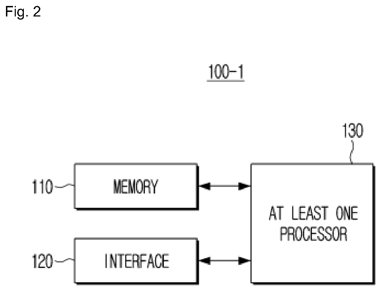

As described above, each of the plurality of electronic apparatuses 100-1, 100-2, 100-3, and 100-4 may provide a corrected image signal such that the display group 200 displays an image by correcting a luminance value to a smaller luminance value compared to a luminance value of an original image as a degree of separation from a center increases, thereby reducing power consumption of the display group 200 while achieving an effect of preventing a user from perceiving a difference from the original image. In the description of FIG. 2 to be provided later, various embodiments of the present disclosure will be described together with configurations of each of the plurality of electronic apparatuses 100-1, 100-2, 100-3, and 100-4 according to the present disclosure.

In the following description, for convenience of description, the "first electronic apparatus 100-1" will be collectively referred to as the "electronic apparatus 100-1," and the "first display apparatus 210-1" will be collectively referred to as the "display apparatus 210-1."

FIG. 2 is a block diagram provided to explain a configuration of an electronic apparatus according to one or more embodiments.

Referring to FIG. 2, the electronic apparatus 100-1 may include memory 110, an interface 120, and at least one processor 130.

The memory 110 may store data necessary for implementing various embodiments of the electronic apparatus 100-1 according to one or more embodiments of the present disclosure. The memory 110 may store center information to be applied to the display apparatus 210-1 and luminance correction information according to a degree of separation from the center.

The memory 110 may be implemented in a form of memory embedded in the electronic apparatus 100-1 according to a data storage purpose, or may be implemented in a form of memory detachable from the electronic apparatus 100-1. For example, data for driving the electronic apparatus 100-1 may be stored in memory embedded in the electronic apparatus 100-1, and data for an extended function of the electronic apparatus 100-1 may be stored in memory detachable from the electronic apparatus 100-1.

Meanwhile, in the case of memory embedded in the electronic apparatus 100-1, the memory may be implemented as at least one of volatile memory (e.g., dynamic RAM (DRAM), static RAM (SRAM), or synchronous dynamic RAM (SDRAM)), or non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), a hard drive, or a solid state drive (SSD)).

In addition, in the case of memory detachable from the electronic apparatus 100-1, the memory may be implemented in a form such as a memory card (e.g., a compact flash (CF), secure digital (SD), micro secure digital (Micro-SD), mini secure digital (Mini-SD), extreme digital (xD), or multi-media card (MMC)), or external memory connectable to a USB port (e.g., a USB memory).

The memory 110 may include various instructions necessary for an operation of the at least one processor 130. Here, the instructions may include an instruction for performing acquisition of center information, an instruction for performing calculation of a degree of separation from the center, an instruction for performing identification of a luminance correction value, an instruction for performing generation of a two-dimensional coordinate system, and the like.

In the present disclosure, the "center information" may mean information on a position of a region displaying an image with a luminance value identical/similar to a luminance value of an original image. For example, when the display group 200 is a display group having an 8K resolution (7680 × 4320 pixels), the "center information" may include information on a position corresponding to a pixel positioned at the 3840th from the left and the 2160th from the bottom. As another example, when the display group 200 operates in a multi-view mode displaying a plurality of images, the "center information" may include information on a position of a pixel corresponding to a center point of each of the plurality of images displayed by the display group 200.

In addition, the "center information" may be replaced with and referred to by various expressions indicating the same/similar concept. For example, the "center information" may be replaced with various expressions such as "center portion," "information on a center region," "center point information," and "central point information." However, in the present disclosure, the expression "center information" will be collectively used.

In the present disclosure, "luminance correction information" may mean information on a luminance correction value that changes according to a degree of separation from a center of the display group 200. For example, the "luminance correction information" may include information indicating that the luminance correction value linearly decreases as the degree of separation from the center increases. As another example, the "luminance correction information" may include information indicating that the luminance correction value maintains a constant value until the degree of separation from the center exceeds a threshold value, and the luminance correction value non-linearly decreases from when the degree of separation from the center exceeds the threshold value.

In addition, the "luminance correction information" may be replaced with and referred to by various expressions indicating the same/similar concept. For example, the "luminance correction information" may be replaced with various expressions such as "brightness correction data," "luminance correction information," "luminance adjustment information," and "pixel value correction information." However, in the present disclosure, the expression "luminance correction information" will be collectively used.

The interface 120 may include a communication interface, an operation interface, an input/output interface, and the like. The electronic apparatus 100-1 may be connected to the display apparatus 210-1 through the interface 120.

According to one or more embodiments, the communication interface is configured to perform communication with the display apparatus 210-1 or an external source apparatus. The communication interface may include at least one wireless communication module, at least one wired communication module, and the like. Each communication module may be implemented in a form of at least one hardware chip. The wireless communication module may include at least one of a Wi-Fi module, a Bluetooth module, an infrared communication module, or another communication module. In addition, the communication interface may include at least one communication chip that performs communication according to various wireless communication standards such as Zigbee, 3rd Generation (3G), 3rd Generation Partnership Project (3GPP), Long Term Evolution (LTE), LTE Advanced (LTE-A), 4th Generation (4G), and 5th Generation (5G). The wired communication module may include, for example, at least one of a local area network (LAN) module, an Ethernet module, a pair cable, a coaxial cable, an optical fiber cable, or an ultra wide-band (UWB) module. The communication interface may be implemented in various forms as described above, and may provide a corrected image signal with respect to an external display apparatus by performing communication with the external display apparatus or an external source apparatus.

The operation interface is configured to receive a user operation. The operation interface may include various buttons and the like provided on a main body of the electronic apparatus 100-1.

The input/output interface is configured to input/output various external signals. The input/output interface may be connected to various external memories or external sources (e.g., a web server, a user terminal apparatus), and the like, and may receive various data. The input/output interface may be implemented as at least one or more interfaces among a high definition multimedia interface (HDMI), a mobile high-definition link (MHL), a universal serial bus (USB), USB C-type, a display port (DP), Thunderbolt, a video graphics array (VGA) port, an RGB port, D-subminiature (D-SUB), and a digital visual interface (DVI). At least some of the input/output interfaces may be connected to the communication interface. For example, the input/output interface may transmit information received from an external source apparatus to the communication interface or transmit information received through the communication interface to an external display apparatus.

The at least one processor 130 controls an overall operation of the electronic apparatus 100-1. Specifically, the at least one processor 130 may be connected to the memory 110 and the interface 120, and may control the overall operation of the electronic apparatus 100-1 by executing at least one instruction stored in the memory 110.

The at least one processor 130 may be implemented as a digital signal processor (DSP) processing a digital signal or a microprocessor. However, the present disclosure is not limited thereto, and the at least one processor 130 may include one or more of, or may be defined as, a central processing unit (CPU), a micro controller unit (MCU), a micro processing unit (MPU), a controller, an application processor (AP), a communication processor (CP), an ARM processor, or an artificial intelligence (AI) processor. In addition, the processor 130 may be implemented as a system on chip (SoC) or large scale integration (LSI) in which a processing algorithm is embedded, or may be implemented in a form of a field programmable gate array (FPGA). The at least one processor 130 may perform various functions by executing computer executable instructions stored in the memory 110.

When a method according to various embodiments of the present disclosure includes a plurality of operations, the plurality of operations may be performed by one processor or may be performed by a plurality of processors. The at least one processor 130 may be implemented as a single core processor including one core, or may be implemented as one or more multicore processors including a plurality of cores (e.g., homogeneous multi-cores or heterogeneous multi-cores). Hereinafter, for convenience of description, the at least one processor 130 will be referred to as the processor 130.

The processor 130 may correct an image signal to be provided to the display apparatus 210-1 based on center information and luminance correction information, and provide a corrected image signal to the display apparatus 210-1 through the interface 120.

The processor 130 may provide, to the display apparatus 210-1, an image signal in which luminance is corrected based on a position of the center of the display group 200 and luminance correction information, thereby providing an image signal in which luminance is corrected according to a degree of separation from the center regardless of the number of display apparatuses included in the display group 200 and a shape of the display group 200.

In the description of FIG. 3 to be provided later, a method in which the electronic apparatus 100-1 provides a corrected image signal to the display apparatus 210-1 will be described in detail.

FIG. 3 is a view provided to explain an operation of a display system according to one or more embodiments.

Referring to FIG. 3, a plurality of electronic apparatuses 100-1, 100-2, 100-3, 100-4, ..., and 100-n may receive an original image signal from an external source apparatus 300, and provide a corrected image signal to a plurality of display apparatuses 210-1, 210-2, 210-3, 210-4, ..., and 210-n included in the display group 200.

A method by which each of the plurality of electronic apparatuses 100-1, 100-2, 100-3, 100-4, ..., and 100-n provides a corrected image signal to each of the plurality of display apparatuses 210-1, 210-2, 210-3, 210-4, ..., and 210-n is the same, and thus, in the following description, for convenience of description, a method by which the electronic apparatus 100-1 provides a corrected image signal to the display apparatus 210-1 will be described as a reference.

The electronic apparatus 100-1 may obtain shape information of the display group 200, overall resolution information, and location information of the display apparatus 210-1 from the external source apparatus 300.

Here, the "shape information of the display group 200" may include information on the number of display apparatuses included in the display group 200, information indicating a geometric shape corresponding to the display group 200, and the like.

Here, the "overall resolution information of the display group 200" may include information on the number of pixels included in the display group 200, a pixel pitch, and an arrangement state of pixels.

Here, the "location information of the display apparatus 210-1" may include information on a position of the display apparatus 210-1 within the display group 200. For example, referring back to FIG. 1, the "location information of the display apparatus 210-1" may include information indicating a top-left position of the display group 200.

The external source apparatus 300 may store software for managing and controlling the display group 200. The external source apparatus 300 may receive information on the plurality of display apparatuses 210-1, 210-2, 210-3, 210-4, ..., and 210-n from the plurality of electronic apparatuses 100-1, 100-2, 100-3, 100-4, ..., and 100-n, and the external source apparatus 300 may identify a shape of the display group 200, an overall resolution, and a position of the display apparatus 210-1 using software that manages the display group 200. The external source apparatus 300 may provide the identified shape information of the display group 200, overall resolution information, and location information of the display apparatus 210-1 to the electronic apparatus 100-1.

When the shape information and the overall resolution information of the display group 200 are obtained, the electronic apparatus 100-1 may obtain center information based on the shape information and the overall resolution information of the display group 200, and store the center information in the memory 110.

According to one or more embodiments, the electronic apparatus 100-1 may identify, based on the shape information of the display group 200, that the display group 200 has a rectangular shape configured with four display apparatuses. In addition, the electronic apparatus 100-1 may identify, based on the overall resolution information of the display group 200, that the display group 200 has a resolution of 7680 × 4320 and a pixel pitch of 0.2 mm.

In this case, the electronic apparatus 100-1 may generate a rectangle having a horizontal length of 7680 × 0.2 mm (1536 mm) and a vertical length of 4320 × 0.2 mm (864 mm) by arranging squares having horizontal/vertical lengths of 0.2 mm in a form of 7680 × 4320. The electronic apparatus 100-1 may identify a point existing at a position of 768 mm in a horizontal direction and a position of 432 mm in a vertical direction within the rectangle as the center of the display group 200. The electronic apparatus 100-1 may store, in the memory 110, information on the position of the center as center information to be applied to the display apparatus 210-1.

When location information of the display apparatus 210-1 is obtained, the electronic apparatus 100-1 may calculate, for each of a plurality of pixels included in the display apparatus 210-1, a degree of separation from the center based on the location information and the center information.

According to one or more embodiments, the electronic apparatus 100-1 may identify, based on the obtained location information, at which position the display apparatus 210-1 connected to the electronic apparatus 100-1 is present within the display group 200. Referring back to FIG. 1, when the display group 200 is configured with four display apparatuses, the location information of the display apparatus 210-1 may correspond to information indicating an upper left position. In this case, the electronic apparatus 100-1 may identify that the display apparatus 210-1 is a display apparatus positioned at the upper left side of the display group 200.

Specifically, the electronic apparatus 100-1 may identify, based on the location information, that the display group 200 is configured with four display apparatuses and has a resolution of 7680 × 4320, and that the display apparatus 210-1 is positioned at the upper left side of the display group 200. In this case, the electronic apparatus 100-1 may identify that 3840 × 2160 pixels existing at the upper left side are pixels included in the display apparatus 210-1. In this case, the electronic apparatus 100-1 may calculate, based on the center information, a degree of separation from the center for each of the 3840 × 2160 pixels included in the display apparatus 210-1 existing at the upper left side.

According to one or more embodiments, the electronic apparatus 100-1 may calculate a degree of separation from the center for each of the plurality of pixels included in the display apparatus 210-1 in units of mm. For example, the electronic apparatus 100-1 may calculate a degree of separation from the center as 30 mm for a specific pixel included in the display apparatus 210-1.

According to one or more embodiments, the electronic apparatus 100-1 may calculate, for each of the plurality of pixels included in the display apparatus 210-1, a degree of separation in a horizontal direction from the center and a degree of separation in a vertical direction from the center. For example, the electronic apparatus 100-1 may identify, for a specific pixel included in the display apparatus 210-1, a degree of separation in the horizontal direction from the center as 15 mm and a degree of separation in the vertical direction from the center as 10 mm.

According to one or more embodiments, the electronic apparatus 100-1 may calculate a degree of separation from the center for each of the plurality of pixels included in the display apparatus 210-1 in units of pixels. For example, the electronic apparatus 100-1 may identify, for a specific pixel included in the display apparatus 210-1, a degree of separation in the horizontal direction from the center as 130 pixels and a degree of separation in the vertical direction from the center as 150 pixels.

The electronic apparatus 100-1 may identify a luminance correction value for each of the plurality of pixels included in the display apparatus 210-1 based on the calculated degree of separation from the center and luminance correction information. In addition, the electronic apparatus 100-1 may correct a luminance value included in an image signal to be provided to the display apparatus 210-1 based on the luminance correction value, thereby identifying a corrected luminance value for each of the plurality of pixels. The electronic apparatus 100-1 may provide a corrected image signal including the corrected luminance value to the display apparatus 210-1 through the interface 120.

In FIG. 3, the external source apparatus 300 is illustrated as a desktop PC, but this is merely one example, and the external source apparatus 300 may be implemented as various electronic apparatuses capable of providing an original image signal to the electronic apparatus 100-1, such as a smartphone, a laptop PC, a tablet PC, or a server apparatus.

In the above description, it has been described only that the electronic apparatus 100-1 may identify a degree of separation from the center for each of the plurality of pixels included in the display apparatus 210-1 in units of mm or in units of pixels, but the electronic apparatus 100-1 may also calculate the degree of separation from the center by normalizing a distance identified in units of mm or in units of pixels to a value between 0 and 1.

According to one or more embodiments, the electronic apparatus 100-1 may calculate the degree of separation from the center based on a maximum-minimum normalization method. Specifically, the electronic apparatus 100-1 may perform normalization such that a degree of separation from the center of a pixel closest to the center is set to 0 and a degree of separation from the center of a pixel farthest from the center is set to 1.

The above-described maximum-minimum normalization method is merely one example, and the electronic apparatus 100-1 may of course calculate the degree of separation from the center for each of the plurality of pixels based on various normalization methods.

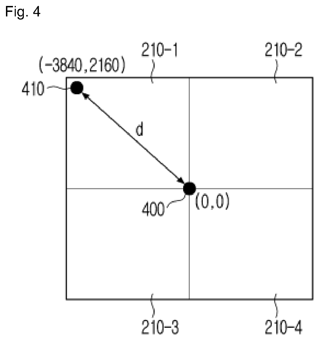

In the description of FIG. 4 below, a method by which the electronic apparatus 100-1 sets a two-dimensional coordinate system within the display group 200 and calculates a degree of separation from the center for each of the plurality of pixels will be described.

FIG. 4 is a view provided to explain a method of calculating a degree of separation from a center of an electronic apparatus according to one or more embodiments.

Referring to FIG. 4, the electronic apparatus 100-1 may generate a two-dimensional coordinate system corresponding to a shape of the display group 200, and identify coordinate values of each of a plurality of pixels included in the display apparatus 210-1.

The electronic apparatus 100-1 may generate a two-dimensional coordinate system having, as an origin, a position corresponding to a center point of the display group 200 based on shape information and overall resolution information of the display group 200, and having a pixel pitch as a unit length.

According to one or more embodiments, as illustrated in FIG. 4, the shape information of the display group 200 may correspond to information indicating that four display apparatuses are arranged in a rectangular shape, and the overall resolution information of the display group 200 may correspond to information indicating that the display group 200 has a resolution of 7680 × 4320 and a pixel pitch of 0.2 mm. In this case, the electronic apparatus 100-1 may generate a two-dimensional coordinate system having, as an origin, a position corresponding to a pixel existing at the 3840th position in a right direction and the 2160th position in a downward direction from an upper left corner point of the display group 200, and having 0.2 mm as a unit length.

The electronic apparatus 100-1 may identify coordinates of each of the plurality of pixels included in the display apparatus 210-1 within the two-dimensional coordinate system based on location information of the display apparatus 210-1.

According to one or more embodiments, as illustrated in FIG. 4, an overall shape of the display group 200 may be a rectangular shape, and may include a total of 7680 × 4320 pixels. In this case, the location information of the display apparatus 210-1 may correspond to information indicating that the display apparatus 210-1 is positioned at an upper left side of the display group 200. The electronic apparatus 100-1 may identify, based on the location information, that 3840 × 2160 pixels existing at the upper left side are the plurality of pixels included in the display apparatus 210-1, and the electronic apparatus 100-1 may identify coordinates of each of the 3840 × 2160 pixels included in the display apparatus 210-1.

In this case, the electronic apparatus 100-1 may identify a pixel 410 at an upper left corner point of the display apparatus 210-1 as a pixel having coordinate values (-3840, 2160), because the pixel 410 is a pixel moved by 3840 pixels in a left direction and 2160 pixels in an upward direction from the center point.

The electronic apparatus 100-1 may calculate, for each of the plurality of pixels, a degree of separation from the center based on the coordinates of each of the plurality of pixels.

According to one or more embodiments, the electronic apparatus 100-1 may calculate a distance between coordinates of each of the plurality of pixels and coordinates of the origin, thereby calculating a degree of separation from the center for each of the plurality of pixels. For example, the electronic apparatus 100-1 may calculate a distance between the center and an upper left corner pixel 410 as approximately 4405 based on a coordinate value (-3840, 2160) of the upper left corner pixel 410 of the display apparatus 210-1 and a coordinate value (0, 0) of the origin. The electronic apparatus 100-1 may calculate, for each of the plurality of pixels, the degree of separation from the center by normalizing the distance between the center and each of the plurality of pixels such that the degree of separation from the center of a pixel having a distance of 4405 from the center and being farthest from the center is set to 1.

According to one or more embodiments, the electronic apparatus 100-1 may calculate a horizontal-direction distance and a vertical-direction distance between coordinates of each of the plurality of pixels and coordinates of the origin, respectively, thereby calculating the degree of separation from the center for each of the plurality of pixels. For example, the electronic apparatus 100-1 may calculate a horizontal-direction distance from the center of an upper left corner pixel 410 as 3840 and a vertical-direction distance from the center as 2160 based on a coordinate value (-3840, 2160) of the upper left corner pixel 410 and a coordinate value (0, 0) of the origin.

In this case, the electronic apparatus 100-1 may calculate a horizontal-direction degree of separation from the center for each of the plurality of pixels by normalizing a horizontal-direction distance from the center of each of the plurality of pixels such that a horizontal-direction degree of separation from the center of a pixel having a horizontal-direction distance of 3840 is set to 1 and a horizontal-direction degree of separation from the center of a pixel having a horizontal-direction distance of 0 is set to 0.

In addition, the electronic apparatus 100-1 may calculate a vertical-direction degree of separation from the center for each of the plurality of pixels by normalizing a vertical-direction distance from the center of each of the plurality of pixels such that a vertical-direction degree of separation from the center of a pixel having a vertical-direction distance of 2160 is set to 1 and a vertical-direction degree of separation from the center of a pixel having a vertical-direction distance of 0 is set to 0.

As described above, the electronic apparatus 100-1 may generate a two-dimensional coordinate system corresponding to the shape of the display group 200, and identify the degree of separation from the center for each of the plurality of pixels included in the display apparatus 210-1 based on the two-dimensional coordinate system. Accordingly, regardless of a form in which the display group 200 is implemented as a display, the electronic apparatus 100-1 may generate a two-dimensional coordinate system corresponding to the shape of the display group 200 and rapidly identify, based on the generated coordinate system, a degree of separation from the center for each of the plurality of pixels.

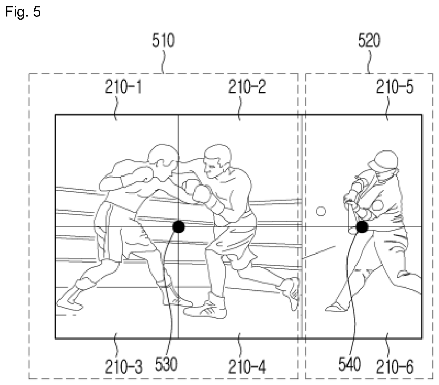

In the description of FIG. 5 below, a method by which the electronic apparatus 100-1 obtains center information will be described in detail.

FIG. 5 is a view provided to explain a method of obtaining center information of an electronic apparatus according to one or more embodiments.

Referring to FIG. 5, the electronic apparatus 100-1 may provide a corrected image signal to the display apparatus 210-1 even when the display group 200 operates in a multi-view mode displaying a plurality of images.

**As** illustrated in FIG. 5, it is assumed that the display group 200 displays two images, four display apparatuses 210-1, 210-2, 210-3, and 210-4 display a first image, and two display apparatuses 210-5 and 210-6 display a second image.

When the display group 200 operates in a multi-view mode displaying a plurality of images, the electronic apparatus 100-1 may obtain location information and resolution information of at least one external display apparatus 210-2, 210-3, and 210-4 displaying, within the display group 200, one image identical to that displayed by the display apparatus 210-1.

According to one or more embodiments, the external source apparatus 300 may identify the at least one external display apparatus 210-2, 210-3, and 210-4 displaying one image identical to that displayed by the display apparatus 210-1, and obtain location information and resolution information of the at least one external display apparatus 210-2, 210-3, and 210-4. In this case, the external source apparatus 300 may provide the obtained location information and resolution information to the electronic apparatus 100-1.

Here, the location information and the resolution information of the at least one external display apparatus 210-2, 210-3, and 210-4 may include information on where the at least one external display apparatus 210-2, 210-3, and 210-4 is arranged within the display group 200, and information on how a plurality of pixels included in the at least one external display apparatus 210-2, 210-3, and 210-4 are arranged.

Specifically, the location information of the at least one external display apparatus 210-2, 210-3, and 210-4 may correspond to information indicating that each of the at least one external display apparatus 210-2, 210-3, and 210-4 is positioned at a right side, a lower side, and a lower right direction of the display apparatus 210-1. The resolution information of the at least one external display apparatus 210-2, 210-3, and 210-4 may correspond to information indicating that all of the at least one external display apparatus 210-2, 210-3, and 210-4 include a plurality of pixels arranged as 3840 × 2160 and have a pixel pitch of 0.2 mm.

The electronic apparatus 100-1 may identify an overall shape of a display set (display cluster) for displaying the same one image based on the location information and the resolution information of the at least one external display apparatus 210-2, 210-3, and 210-4.

Here, the "display set" may mean a set of display apparatuses displaying the same one image. For example, as illustrated in FIG. 5, the plurality of display apparatuses 210-1, 210-2, 210-3, and 210-4 displaying the same first image may constitute a first display set. In addition, the "display set" may be replaced with and referred to by various expressions indicating the same/similar concept. For example, the "display set" may be replaced with various expressions such as "display group" and "display group body." However, in the present disclosure, the expression "display set" will be collectively used.

According to one or more embodiments, the electronic apparatus 100-1 may obtain, based on the location information and the resolution information of the at least one external display apparatus 210-2, 210-3, and 210-4, information indicating a geometric shape corresponding to the first display set 510, and information on how a plurality of pixels included in the first display set 510 are arranged.

Specifically, the electronic apparatus 100-1 may identify that the first display set 510 has a rectangular shape configured with four display apparatuses, based on information indicating that each of the at least one external display apparatus 210-2, 210-3, and 210-4 is positioned in a right direction, a lower direction, and a lower right diagonal direction of the display apparatus 210-1, respectively. In addition, the electronic apparatus 100-1 may identify that the plurality of pixels included in the first display set 510 are arranged in a form of 7680 × 4320, based on information indicating that all of the at least one external display apparatus 210-2, 210-3, and 210-4 include a plurality of pixels arranged as 3840 × 2160 and have a pixel pitch of 0.2 mm.

In this case, the electronic apparatus 100-1 may identify that the overall shape of the first display set 510 is a rectangle having a horizontal length of 7680 × 0.2 mm (1536 mm) and a vertical length of 4320 × 0.2 mm (864 mm).

According to one or more embodiments, a fifth electronic apparatus 100-5 connected to the fifth display apparatus 210-5 or a sixth electronic apparatus 100-6 connected to the sixth display apparatus 210-6 may also identify an overall shape of a second display set 520 displaying the second image based on the same method as the above-described method.

The electronic apparatus 100-1 may obtain center information to be applied to the display apparatus 210-1 based on the identified overall shape of the display set, and store the obtained center information in the memory 110.

According to one or more embodiments, the electronic apparatus 100-1 may identify a first center 530 of the first display set 510 based on the identified overall shape of the first display set 510, thereby obtaining information on the first center 530. Specifically, the electronic apparatus 100-1 may identify a center point of a rectangle having a horizontal length of 1536 mm and a vertical length of 864 mm, and identify information on a position of the identified center point as center information and store the center information in the memory 110.

According to one or more embodiments, the fifth electronic apparatus 100-5 connected to the fifth display apparatus 210-5 or the sixth electronic apparatus 100-6 connected to the sixth display apparatus 210-6 may also identify a second center 540 based on the overall shape of the second display set 520 displaying the second image based on the same method as the above-described method.

Since the method by which the electronic apparatus 100-1 obtains the center information based on the overall shape has been described in detail in the descriptions of FIGS. 3 and 4, a description thereof will be omitted.

**As** described above, even when the display group 200 operates in the multi-view mode, the display system according to the present disclosure may identify a display set displaying each of the plurality of images and obtain center information for each of the plurality of display sets. Accordingly, the display system according to the present disclosure may calculate a degree of separation from the center for each of a plurality of display sets and correct luminance for each of the plurality of display sets, thereby achieving an effect of reducing power consumption even in the multi-view mode while preventing a user from perceiving a difference from the original image.

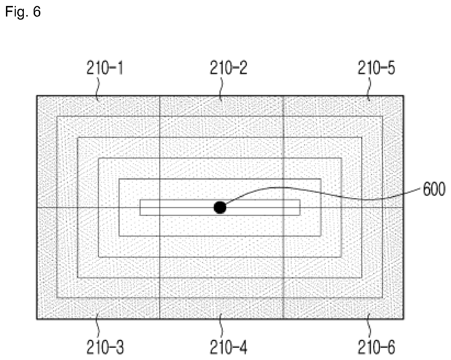

In the description of FIG. 6 below, a method of setting a luminance correction value for an image to be displayed on the display group 200 will be described.

FIG. 6 is a view provided to explain a method of setting a luminance change rate of an electronic apparatus according to one or more embodiments.

Referring to FIG. 6, the display group 200 may be implemented in a rectangular shape having a horizontal direction longer than a vertical direction.

According to one or more embodiments, luminance correction information may include information on a change rate of luminance correction values for respective regions within the display group 200, and the electronic apparatus 100-1 may identify the change rate of luminance correction values for respective regions corresponding to an overall shape of the display group 200.

In the present disclosure, the "luminance correction value" may mean a correction value to be applied to a luminance value included in an original image signal. For example, it is assumed that the original image signal includes luminance data in which a luminance value for a first pixel is "(R, G, B) = (210, 100, 50)" and a luminance value for a second pixel is "(R, G, B) = (250, 120, 160)." In this case, when the electronic apparatus 100-1 identifies a luminance correction value for the first pixel as 90% and a luminance correction value for the second pixel as 80%, the electronic apparatus 100-1 may apply the luminance correction value of 90% to the luminance value of the first pixel included in the original image signal and apply the luminance correction value of 80% to the luminance value of the second pixel. As a result, the electronic apparatus 100-1 may provide an image signal to which the luminance correction values are applied to the display apparatus 210-1, such that the display apparatus 210-1 may display an image with a luminance value of "(R, G, B) = (189, 90, 45)" for the first pixel and display an image with a luminance value of "(R, G, B) = (200, 96, 128)" for the second pixel.

According to one or more embodiments, the electronic apparatus 100-1 may define the luminance correction information such that a luminance correction value of 100% is applied to a pixel corresponding to a center region of the display group 200, and a luminance correction value of 80% is applied to a pixel corresponding to an edge region of the display group 200.

According to one or more embodiments, the luminance correction information may include information indicating that the luminance correction value is lowered by 1% whenever moving by 10 pixels in a horizontal direction from a center 600 of the display group 200, and the luminance correction value is lowered by 1% whenever moving by 4 pixels in a vertical direction.

According to one or more embodiments, the luminance correction information may include information indicating that the luminance correction value is lowered by 1% whenever moving by 10 cm in a diagonal direction from the center 600 of the display group 200.

The electronic apparatus 100-1 may identify the overall shape of the display group 200 based on shape information of the display group 200, identify the change rate of luminance correction values for respective regions corresponding to the overall shape of the display group 200, and store information on the identified change rate of luminance correction values for respective regions in the memory 110.

According to one or more embodiments, when the overall shape of the display group 200 is a square, the electronic apparatus 100-1 may identify the change rate of luminance correction values for respective regions corresponding to the square.

When the overall shape of the display group 200 is a square having a horizontal/vertical length of 80 cm, the electronic apparatus 100-1 may obtain a plurality of concentric squares having a center of the display group 200 as a center point.

In this case, the plurality of concentric squares may include a square having a horizontal/vertical length of 1 cm, a square having a horizontal/vertical length of 2 cm, a square having a horizontal/vertical length of 3 cm, a square having a horizontal/vertical length of 80 cm, and the like. The electronic apparatus 100-1 may apply a luminance correction value of 100% to a plurality of pixels existing inside the square having the horizontal/vertical length of 1 cm, and may apply a luminance correction value of 99% to a plurality of pixels existing outside the square having the horizontal/vertical length of 1 cm and inside the square having the horizontal/vertical length of 2 cm. Similarly, the electronic apparatus 100-1 may apply a luminance correction value of 98% to a plurality of pixels existing outside the square having the horizontal/vertical length of 2 cm and inside the square having the horizontal/vertical length of 3 cm.

In other words, the electronic apparatus 100-1 may obtain a plurality of concentric polygons having a center of the display group 200 as a center point and corresponding to an overall shape of the display group 200, and may divide the display group 200 into a plurality of regions based on the obtained plurality of concentric polygons. The electronic apparatus 100-1 may identify a change rate of luminance correction values for respective regions such that a smaller luminance correction value is applied as a pixel exists in a region having a larger degree of separation from the center.

As illustrated in FIG. 6, it is assumed that the overall shape of the display group 200 is a rectangle having a horizontal length-to:vertical length ratio of 8:3. The electronic apparatus 100-1 may obtain a plurality of concentric rectangles having a horizontal length and a vertical length ratio of 8:3 and having the center 600 of the display group 200 as a center point. The electronic apparatus 100-1 may divide the display group 200 into a plurality of regions based on the obtained plurality of concentric rectangles, and apply different luminance correction values to the divided plurality of regions.

According to one or more embodiments, when the overall shape of the display group 200 is a rectangle having a horizontal length longer than a vertical length, the electronic apparatus 100-1 may set a change rate of luminance correction values in a horizontal direction to be smaller than a change rate of luminance correction values in a vertical direction.

Here, the change rate of luminance correction values in the horizontal direction may include information on a change in luminance correction values of pixels included between the center region and a horizontal-direction edge region of the display group 200, and the change rate of luminance correction values in the vertical direction may include information on a change in luminance correction values of pixels included between the center region and a vertical-direction edge region of the display group 200.

According to one or more embodiments, the luminance correction information may include luminance difference information. The "luminance difference information" may mean a ratio of a luminance correction value of an edge region of the display group 200 to a luminance correction value of a center region of the display group 200.

As described above, when the electronic apparatus 100-1 sets such that a luminance correction value of 100% is applied to a pixel corresponding to the center region of the display group 200 and a luminance correction value of 80% is applied to a pixel corresponding to the edge region of the display group 200, the luminance difference information may be set to 0.8 (80/100).

**As** described above, the electronic apparatus 100-1 may not simply set the luminance correction value for each of the plurality of pixels included in the display apparatus 210-1 based only on the degree of separation from the center, but may identify a luminance correction value corresponding to the overall shape of the display group 200 to set a change rate of luminance correction values.

According to one or more embodiments, as illustrated in FIG. 6, when the overall shape of the display group 200 is a rectangle having a horizontal length longer than a vertical length, a distance between the center 600 and the vertical-direction edge region may be small while a distance between the center 600 and the horizontal-direction edge region may be large. In this case, the electronic apparatus 100-1 may set the change rate of luminance correction values in the vertical direction to be greater than the change rate of luminance correction values in the horizontal direction such that the same luminance correction value is applied to pixels included in the edge region of the display group 200.

Specifically, when the electronic apparatus 100-1 sets the luminance correction value simply based only on the degree of separation from the center, a luminance correction value of 90% may be applied to the vertical-direction edge region close to the center region, while a luminance correction value of 80% may be applied to the horizontal-direction edge region. On the other hand, when the electronic apparatus 100-1 sets the change rate of luminance correction values in the vertical direction to be greater, a luminance correction value of 80% may be applied to both the vertical-direction edge region and the horizontal-direction edge region, thereby achieving an effect of reducing power consumption.

According to one or more embodiments, when the overall shape of the display group 200 is a rectangle having a vertical direction longer than a horizontal direction, the electronic apparatus 100-1 may set the change rate of luminance correction values in the horizontal direction to be greater than the change rate of luminance correction values in the vertical direction such that the same luminance correction value is applied to a plurality of pixels included in the horizontal-direction edge region and the vertical-direction edge region of the display group 200.

According to one or more embodiments, as illustrated in FIG. 6, it is assumed that the display group 200 has a resolution of 11520 × 4320, a luminance correction value of 100% is applied to the center region, and a luminance correction value of 80% is applied to both the horizontal-direction edge region and the vertical-direction edge region. In this case, the change rate of luminance correction values in the horizontal direction may be set to include information indicating that an average change rate is about 0.003 (20/5760), and the change rate of luminance correction values in the vertical direction may be set to include information indicating that an average change rate is about 0.009 (20/2160).

In the above description, only a case in which the overall shape of the display group 200 is implemented as a rectangle has been described as an example, but this is merely one example, and even when the rectangle is inclined at a preset angle or implemented in a rhombus shape, the electronic apparatus 100-1 may of course set the change rate of luminance correction values corresponding to the shape.

In the above description, only a case in which the display group 200 displays one image has been described as an example, but this is merely for convenience of description, and as described in FIG. 5, even when the display group 200 operates in the multi-view mode, the change rate of luminance correction values may of course be variously set based on a shape of a display set.

As described above, the electronic apparatus 100-1 may set the change rate of luminance correction values to correspond to the overall shape of the display group 200. Accordingly, regardless of the shape in which the overall shape of the display group 200 is implemented, the electronic apparatus 100-1 may identify the change rate of luminance correction values corresponding to the overall shape of the display group 200 and provide a corrected image signal.

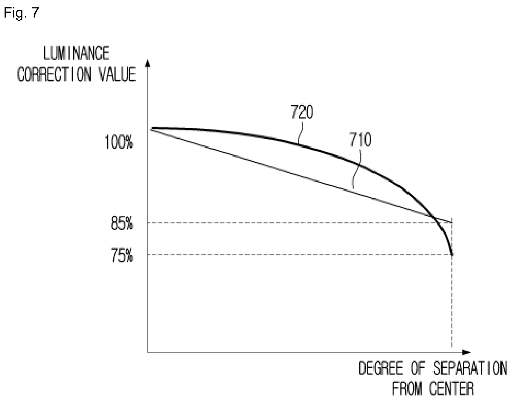

In the description of FIG. 7 below, a method by which the electronic apparatus 100-1 variously sets luminance correction values according to a degree of separation from the center will be described.

FIG. 7 is a view provided to explain a method of setting a luminance correction function of an electronic apparatus according to one or more embodiments.

Referring to FIG. 7, the luminance correction information may include a first luminance correction function 710 in which a luminance correction value linearly decreases as a degree of separation from the center increases, and a second luminance correction function 720 in which the luminance correction value non-linearly decreases as the degree of separation from the center increases.

According to one or more embodiments, the electronic apparatus 100-1 may identify a luminance correction value for each of a plurality of pixels included in the display apparatus 210-1 based on the first luminance correction function 710 or the second luminance correction function 720. Specifically, the electronic apparatus 100-1 may calculate a degree of separation from the center for each of the plurality of pixels included in the display apparatus 210-1, and may identify a luminance correction value for each of the plurality of pixels by inputting the degree of separation from the center for each of the plurality of pixels into the first luminance correction function 710 or the second luminance correction function 720.

The electronic apparatus 100-1 may not only variously set a form of the luminance correction function, but may also variously set luminance difference information. Referring to FIG. 7, the first luminance correction function 710 may be a luminance correction function when the luminance difference information is set to 85%, and the second luminance correction function 720 may be a luminance correction function when the luminance difference information is set to 75%.

The electronic apparatus 100-1 may obtain information on current power consumption of the display group 200 and variously set a ratio of a luminance correction value of an edge region to a luminance correction value of a center region based on the current power consumption.

According to one or more embodiments, when information on the current power consumption of the display group 200 is obtained, the electronic apparatus 100-1 may compare the current power consumption with a preset power value.

According to one or more embodiments, when the current power consumption is less than the preset power value, the electronic apparatus 100-1 may set a ratio of a luminance correction value of the edge region to a luminance correction value of the center region to be equal to or greater than a preset ratio value.

According to one or more embodiments, when the current power consumption is equal to or greater than the preset power value, the electronic apparatus 100-1 may set the ratio of the luminance correction value of the edge region to the luminance correction value of the center region to be less than the preset ratio value.

Specifically, it is assumed that the preset power value is 600 W/m2. The electronic apparatus 100-1 may obtain information on power consumed by the entire display group 200 to display an image, and when the power consumption of the display group 200 is equal to or greater than 600 W/m2, the electronic apparatus 100-1 may set the ratio of the luminance correction value of the edge region to the luminance correction value of the center region to be less than 75%. In addition, when the power consumption of the display group 200 is less than 600 W/m2, the electronic apparatus 100-1 may set the ratio of the luminance correction value of the edge region to the luminance correction value of the center region to be equal to or greater than 75%.

As in the above-described method, when the current power consumption of the display group 200 is equal to or greater than the preset power value, the electronic apparatus 100-1 may achieve an effect of lowering the power consumption of the display group 200 by setting the luminance correction value to be lower.

Here, the preset power value may be set to various values by a manufacturer and a user, such as being set to 600 W/m2. In addition, the preset ratio value may of course also be set to various values by the manufacturer and the user, such as being set to 75%.

Although FIG. 7 illustrates only luminance correction functions in which the luminance correction value linearly decreases or decreases in a form of an upwardly convex curve as the degree of separation from the center increases, this is merely one example, and the luminance correction function may be implemented in various forms of functions, such as a function in which the luminance correction value maintains 100% until the degree of separation from the center exceeds a preset degree and then decreases in a form of a downwardly convex curve when the preset degree is exceeded.

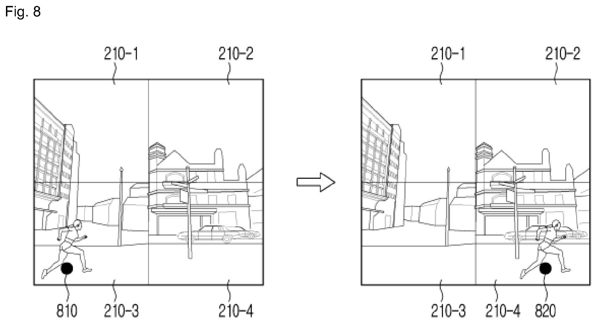

In the description of FIG. 8 below, a method by which the electronic apparatus 100-1 obtains center information based on various pieces of information obtained from outside will be described.

FIG. 8 is a view provided to explain a method of obtaining center information of an electronic apparatus according to one or more embodiments.

Referring to FIG. 8, the electronic apparatus 100-1 may obtain center information to be applied to the display apparatus 210-1 based on an occurrence position of a major event within an image.

**The** electronic apparatus 100-1 may obtain information on an occurrence position of a major event within an entire image displayed by the display group 200, and may obtain center information based on shape information of the display group 200 and the information on the occurrence position of the major event.

Here, the occurrence position of the major event may mean a position corresponding to various events occurring in an image, such as a position at which a major object exists, a position at which a new object appears, and a position at which text is displayed.

According to one or more embodiments, the electronic apparatus 100-1 may obtain an entire image signal and identify the occurrence position of the major event based on image recognition technology. As illustrated in FIG. 8, the major event within the image displayed by the display group 200 may be "movement of a character."

The electronic apparatus 100-1 may identify a position of a moving character in the image based on image recognition technology, and may identify, as a center, a region of pixels corresponding to the position of the character within the overall shape of the display group 200.

Specifically, the electronic apparatus 100-1 may identify a first pixel region 810 corresponding to a position of the character in a first frame, and identify the first pixel region 810 as a center within the first frame. In addition, the electronic apparatus 100-1 may identify a second pixel region 820 corresponding to a position of the character in a second frame, and identify the second pixel region 820 as a center within the second frame.

As described above, the electronic apparatus 100-1 may identify a position at which the major event occurs in the image as a center, thereby controlling the position at which the major event occurs to be displayed with the same luminance value as the original image, and controlling an image to be displayed with a smaller luminance value than the original image as a degree of separation from the position at which the major event occurs increases.

In the above description, the major event occurring in the image has been described by taking, as an example, movement of a character, but this is merely one example, and may include various events such as an event in which a new character appears and an event in which a player scores in a sports game.

In addition, the electronic apparatus 100-1 may obtain gaze tracking information of a user with respect to an entire image displayed by the display group 200, and may obtain center information based on shape information of the display group 200 and the gaze tracking information.

Here, the gaze tracking information of the user may mean information regarding in which region of the display group 200 the gaze of the user viewing the image displayed by the display group 200 is located. The electronic apparatus 100-1 may obtain an image capturing the user and obtain information on which pixel among a plurality of pixels included in the display group 200 corresponds to the position of the user's gaze, based on various user gaze estimation methods. In addition, it is also possible that an external apparatus obtains the gaze direction of the user and directly provides the gaze direction to the electronic apparatus 100-1.

As described above, the electronic apparatus 100-1 may identify a position of a pixel corresponding to the gaze direction of the user among the plurality of pixels included in the display group 200, and may obtain center information by identifying the position of the pixel corresponding to the gaze direction of the user as a center. Accordingly, the electronic apparatus 100-1 may control a pixel region corresponding to the gaze direction of the user to be displayed with the same luminance value as the original image, and control an image to be displayed with a smaller luminance value than the original image as a degree of separation from the pixel corresponding to the gaze direction of the user increases.

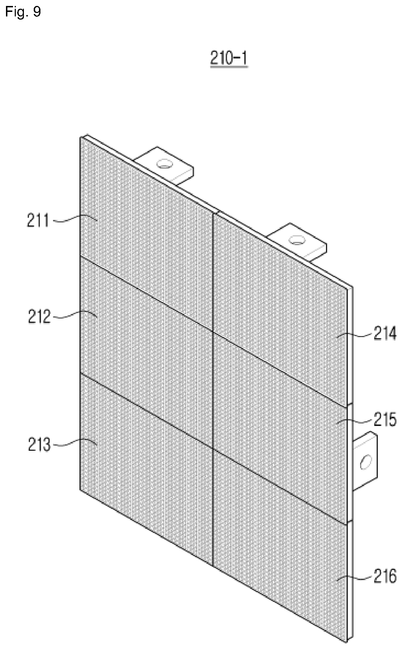

In the description of FIG. 9 below, a configuration of a display apparatus according to the present disclosure and an operation method of a display system will be described.

FIG. 9 is a view provided to explain a configuration of a display apparatus according to one or more embodiments.

Referring to FIG. 9, the display apparatus 210-1 may include a plurality of display modules 211, 212, 213, 214, 215, and 216.

Each of the plurality of display modules 211, 212, 213, 214, 215, and 216 may include a plurality of LED elements. Here, each of the plurality of LED elements may be implemented as an element in which a red LED, a green LED, and a blue LED are implemented as one pixel. In addition, the plurality of LED elements may be implemented as micro LEDs. A micro LED is an LED having a size of about 5 to 100 micrometers, and means an ultra-small light emitting element that emits light by itself without a color filter.

The display apparatus 210-1 may include a plurality of coupling portions capable of being coupled to another display apparatus. Accordingly, the display apparatus 210-1 may form the display group 200 by being coupled to another display apparatus.

The display apparatus 210-1 may be implemented in a bezel-less form, and thus may display a seamless image even when the display apparatus 210-1 is coupled to other display apparatuses to form the display group 200 and display one image.

Although FIG. 9 illustrates that the display apparatus 210-1 includes 2 × 3 display modules, this is merely one example, and the display apparatus 210-1 may of course be configured with n × m display modules (n and m are natural numbers equal to or greater than 2).

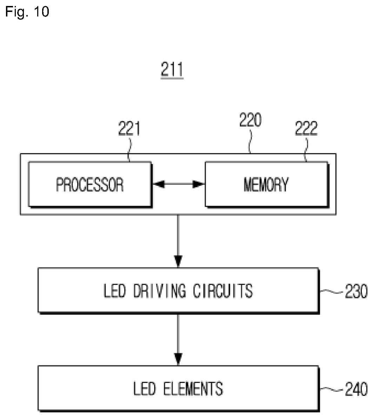

In the description of FIG. 10 below, a method by which the display apparatus 210-1 displays an image will be described in detail.

FIG. 10 is a block diagram provided to explain a configuration of a display module according to one or more embodiments.

Referring to FIG. 10, the display module 211 included in the display apparatus 210-1 may include a driver 220, a plurality of LED driving circuits 230, and a plurality of LED elements 240.

The driver 220 may include a processor 221 and memory 222, and may input various signals to the plurality of LED driving circuits 230.

The memory 222 may store arrangement information of LED elements, and may also store an algorithm for generating a PWM signal corresponding to each of the plurality of LED elements 240 included in the display module 211 based on a received image signal.

The memory 222 may be implemented in various forms such as RAM, flash memory, HDD, external memory, and a memory card, and is not limited to any one thereof.

The processor 221 may generate a PWM signal corresponding to a luminance value corresponding to each of the plurality of LED elements 240, and provide the PWM signal to the plurality of LED driving circuits 230. Specifically, the processor 221 may generate a PWM signal corresponding to a luminance value included in a corrected image signal, and provide the PWM signal to the plurality of LED driving circuits 230.

For example, when a corrected image signal includes information indicating that a first pixel is to emit light with a luminance value of "(R, G, B) = (150, 100, 50)," the processor 221 may generate a PWM signal for causing a red LED element included in the first pixel to emit light with a luminance value of 150, a green LED element included in the first pixel to emit light with a luminance value of 100, and a blue LED element included in the first pixel to emit light with a luminance value of 50, and provide the PWM signal to an LED driving circuit connected to the first pixel.

In the above description, the driver 220 has been described as including only the processor 221 and the memory 222, but may further include a timing controller, a data driver, a gate driver, and the like.

The timing controller may receive an input signal (IS), a horizontal synchronization signal (Hsync), a vertical synchronization signal (Vsync), a main clock signal (MCLK), and the like from outside, generate an image data signal, a scan control signal, a data control signal, a light emission control signal, and the like, and provide the generated signals to a substrate, the data driver, the gate driver, and the like.

In particular, the timing controller may apply at least one of various signals (Emi, Vsweep, Vini, VST, and Test/Discharging) to the plurality of LED driving circuits 230. In addition, the timing controller may also apply a control signal (MUX Sel R, G, B) for selecting one sub-pixel among R, G, and B sub-pixels to the plurality of LED driving circuits 230.

The data driver (or source driver/data driver) is a means for generating a data signal, and may receive image data of R/G/B components and the like to generate a data voltage (e.g., a PWM data voltage).

The gate driver (or gate driving unit) is a means for generating various control signals, such as a control signal (SPWM(n)) and a control signal (SPAM). The gate driver may input the generated various control signals to LED driving circuits corresponding to a specific row (or a specific horizontal line) among a plurality of pixels on the substrate, but is not limited thereto.

The gate driver may apply a driving voltage (VDD) to a driving voltage terminal of the LED driving circuit according to an embodiment.

The data driver and the gate driver may be implemented such that all or a part thereof is included in a thin film transistor (TFT) layer formed on one surface of glass of the substrate, or may be implemented as a separate semiconductor IC and disposed on another surface of the glass.

**The** plurality of LED driving circuits 230 may receive PWM data voltages in a scanning period.

In addition, the plurality of LED driving circuits 230 may provide driving currents to a plurality of light emitting elements during a time corresponding to the input PWM data voltages in an emission period, thereby driving the plurality of LED elements 240.

**As** described above, the display apparatus 210-1 may include the plurality of display modules 211, 212, 213, 214, 215, and 216, and each of the plurality of display modules 211, 212, 213, 214, 215, and 216 may include the driver 220, the plurality of LED driving circuits 230, and the plurality of LED elements 240, and may generate a PWM signal based on a corrected image signal received from the electronic apparatus 100-1 to display an image with a corrected luminance value.

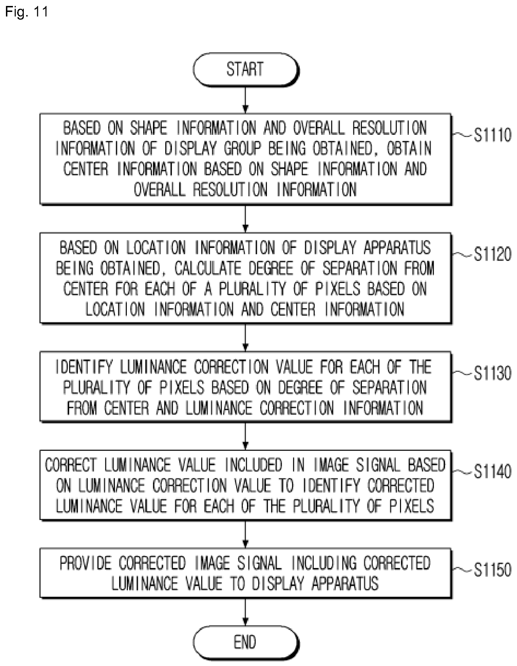

FIG. 11 is a flowchart provided to explain a method of providing a corrected image signal of an electronic apparatus according to one or more embodiments.

Referring to FIG. 11, when shape information and overall resolution information of a display group are obtained, the electronic apparatus 100-1 may obtain center information based on the shape information and the overall resolution information (S1110).

According to one or more embodiments, the electronic apparatus 100-1 may obtain information on an occurrence position of a major event within an entire image displayed by the display group, and obtain center information based on the shape information of the display group and the information on the occurrence position of the major event.

According to one or more embodiments, the electronic apparatus 100-1 may obtain gaze tracking information of a user with respect to the entire image displayed by the display group, and obtain center information based on the shape information of the display group and the gaze tracking information.

Subsequently, when location information of a display apparatus is obtained, the electronic apparatus 100-1 may calculate, for each of a plurality of pixels, a degree of separation from a center based on the location information and the center information (S1120).

According to one or more embodiments, the electronic apparatus 100-1 may generate a two-dimensional coordinate system having, as an origin, a position corresponding to a center point of the display group based on the shape information and the overall resolution information of the display group, and having a pixel pitch as a unit length. In addition, the electronic apparatus 100-1 may identify coordinates of each of the plurality of pixels included in the display apparatus within the two-dimensional coordinate system based on the location information of the display apparatus, and calculate, for each of the plurality of pixels, the degree of separation from the center based on the coordinates of each of the plurality of pixels.

Subsequently, the electronic apparatus 100-1 may identify a luminance correction value for each of the plurality of pixels based on the degree of separation from the center and luminance correction information (S1130).

According to one or more embodiments, the luminance correction information may include information on a change rate of luminance correction values for respective regions within the display group.

According to one or more embodiments, the electronic apparatus 100-1 may identify an overall shape of the display group based on shape information of the display group, identify a change rate of luminance correction values for respective regions corresponding to the overall shape, and store information on the identified change rate of luminance correction values for respective regions.

According to one or more embodiments, when the overall shape of the display group is a rectangle having a horizontal length longer than a vertical length, the electronic apparatus 100-1 may set a change rate of luminance correction values in a horizontal direction to be smaller than a change rate of luminance correction values in a vertical direction.

According to one or more embodiments, the luminance correction information may include luminance difference information. The luminance difference information may include a ratio of a luminance correction value of an edge region of the display group to a luminance correction value of a center region of the display group.

According to one or more embodiments, when information on current power consumption of the display group is obtained, the electronic apparatus 100-1 may compare the current power consumption with a preset power value, and when the current power consumption is less than the preset power value, set a ratio of the luminance correction value of the edge region to the luminance correction value of the center region to be equal to or greater than a preset ratio value. In addition, when the current power consumption is equal to or greater than the preset power value, the electronic apparatus 100-1 may set the ratio to be less than the preset ratio value.

Subsequently, the electronic apparatus 100-1 may correct a luminance value included in an image signal based on the luminance correction value to identify a corrected luminance value for each of the plurality of pixels (S1140).

Subsequently, the electronic apparatus 100-1 may provide a corrected image signal including the corrected luminance value to the display apparatus.

The electronic apparatus 100-1 may perform the operations in the order described above, thereby providing, to the display apparatus, an image signal corrected to have a luminance value lower than that of an original image as a degree of separation from the center increases, and through this, reduce power consumption of the display apparatus and at the same time prevent a user from perceiving a difference between the corrected image and the original image.

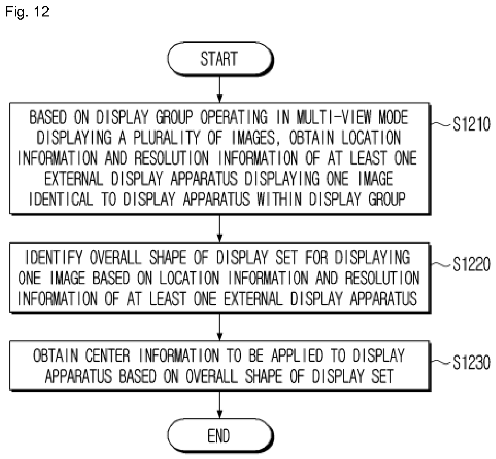

FIG. 12 is a flowchart provided to explain a luminance correction method of an electronic apparatus according to one or more embodiments.

Referring to FIG. 12, when the display group operates in a multi-view mode displaying a plurality of images, the electronic apparatus 100-1 may obtain location information and resolution information of at least one external display apparatus displaying, within the display group, one image identical to that displayed by the display apparatus (S1210).

Subsequently, the electronic apparatus 100-1 may identify an overall shape of a display set for displaying the one image based on the location information and the resolution information of the at least one external display apparatus (S1220).

Subsequently, the electronic apparatus 100-1 may obtain center information to be applied to the display apparatus based on the overall shape of the display set (S1230).

As the electronic apparatus 100-1 performs the operations in the order described above, even when the display group displays a plurality of images, the electronic apparatus 100-1 may identify a center at which an image is displayed and provide an image signal corrected to have a luminance value lower than that of an original image as a degree of separation from the center increases, thereby achieving an effect of reducing power consumption of the display apparatus.

The various methods described in FIGS. 11 and 12 may be performed by an electronic apparatus having the configuration illustrated in FIG. 2, but are not necessarily limited thereto, and may be performed by electronic apparatuses having various configurations.

Meanwhile, in FIGS. 11 and 12, although the order is mapped to all operations in FIGS. 11 and 12 for convenience of description, it is obvious that the order of operations having no dependency on the order or operations capable of being performed in parallel is not necessarily limited to the corresponding order.

Meanwhile, methods according to at least some of the various embodiments of the present disclosure described above may be implemented in a form of an application installable in an existing electronic apparatus.

In addition, methods according to at least some of the various embodiments of the present disclosure described above may be implemented only by a software upgrade or a hardware upgrade for an existing electronic apparatus.

In addition, methods according to at least some of the various embodiments of the present disclosure described above may be performed through an embedded server included in the electronic apparatus, or through at least one external server of the electronic apparatus.

Meanwhile, according to an embodiment of the present disclosure, the various embodiments described above may be implemented as software including instructions stored in a machine-readable storage medium readable by a machine (e.g., a computer). The machine is a device capable of calling instructions stored from the storage medium and operating according to the called instructions, and may include an electronic apparatus (e.g., an electronic apparatus A) according to the disclosed embodiments. When the instructions are executed by a processor, the processor may perform functions corresponding to the instructions directly or using other components under control of the processor. The instructions may include code generated or executed by a compiler or an interpreter. The machine-readable storage medium may be provided in a form of a non-transitory storage medium. Here, the "non-transitory storage medium" merely means that the storage medium is a tangible device and does not include a signal (e.g., an electromagnetic wave), and this term does not distinguish between a case in which data is semi-permanently stored in the storage medium and a case in which data is temporarily stored. For example, the "non-transitory storage medium" may include a buffer in which data is temporarily stored. According to an embodiment, a method according to various embodiments disclosed in the present document may be included in and provided as a computer program product. The computer program product may be traded as a product between a seller and a buyer. The computer program product may be distributed in a form of a machine-readable storage medium (e.g., compact disc read only memory (CD-ROM)), or may be distributed online (e.g., downloaded or uploaded) through an application store (e.g., Play Store^{™}), or directly between two user devices (e.g., smartphones). In the case of online distribution, at least a part of the computer program product (e.g., a downloadable app), may be at least temporarily stored or temporarily generated in a machine-readable storage medium such as a memory of a manufacturer's server, a server of an application store, or a relay server.

Various embodiments of the present disclosure may be implemented as software including instructions stored in a machine-readable storage medium readable by a machine (e.g., a computer). The machine is a device capable of calling stored instructions from the storage medium and operating according to the called instructions, and may include an electronic apparatus (e.g., the electronic apparatus 100-1) according to the disclosed embodiments.

When the above-described instructions are executed by a processor, the processor may perform functions corresponding to the instructions directly or using other components under control of the processor. The instructions may include code generated or executed by a compiler or an interpreter.

Although preferred embodiments of the present disclosure have been illustrated and described above, the present disclosure is not limited to the specific embodiments described above, and various modifications may of course be made by those skilled in the art to which the present disclosure pertains without departing from the gist of the present disclosure as claimed in the claims, and such modifications should not be individually understood from the technical idea or prospect of the present disclosure.

## Claims

1. An electronic apparatus comprising:
an interface connected to one display apparatus included in a display group;
a memory configured to store center information to be applied to the display apparatus and luminance correction information according to a degree of separation from a center; and
at least one processor configured to correct an image signal to be provided to the display apparatus based on the center information and the luminance correction information, and provide a corrected image signal to the display apparatus through the interface,
wherein the at least one processor is configured to:
based on shape information and overall resolution information of the display group being obtained, obtain the center information based on the shape information and the overall resolution information and store the center information in the memory;
based on location information of the display apparatus being obtained, calculate, for each of a plurality of pixels included in the display apparatus, a degree of separation from the center based on the location information and the center information;
identify a luminance correction value for each of the plurality of pixels based on the calculated degree of separation from the center and the luminance correction information;
correct a luminance value included in the image signal to be provided to the display apparatus based on the luminance correction value to identify a corrected luminance value for each of the plurality of pixels; and
provide the corrected image signal including the corrected luminance value to the display apparatus through the interface.

2. The electronic apparatus of claim 1, wherein the at least one processor is configured to:
based on the shape information and the overall resolution information, generate a two-dimensional coordinate system having a position corresponding to a center point of the display group as an origin and having a pixel pitch as a unit length;
identify coordinates of each of the plurality of pixels included in the display apparatus within the two-dimensional coordinate system based on location information of the display apparatus; and
calculate, for each of the plurality of pixels, a degree of separation from the center based on the coordinates of each of the plurality of pixels.

3. The electronic apparatus of claim 1, wherein the at least one processor is configured to:
based on the display group operating in a multi-view mode displaying a plurality of images, obtain location information and resolution information of at least one external display apparatus displaying, within the display group, the same image as an image displayed by the display apparatus;
identify an overall shape of a display set (cluster) for displaying the one image based on the location information and the resolution information of the at least one external display apparatus; and
obtain the center information based on the identified overall shape of the display set and store the center information in the memory.

4. The electronic apparatus of claim 1, wherein the luminance correction information according to a degree of separation from the center includes information on a change rate of luminance correction values for respective regions within the display group, and
wherein the at least one processor is configured to:
identify an overall shape of the display group based on shape information of the display group;
identify a change rate of the luminance correction values for the respective regions corresponding to the overall shape; and
store information on the identified change rate of the luminance correction values for the respective regions in the memory.

5. The electronic apparatus of claim 4, wherein the at least one processor is configured to:
based on the overall shape of the display group being a rectangle having a horizontal length greater than a vertical length, set a change rate of luminance correction values in a horizontal direction to be smaller than a change rate of luminance correction values in a vertical direction,
wherein the change rate of the luminance correction values in the horizontal direction includes information on a change in luminance correction values of pixels included between the center region and a horizontal edge region of the display group, and
wherein the change rate of the luminance correction values in the vertical direction includes information on a change in luminance correction values of pixels included between the center region and a vertical edge region of the display group.

6. The electronic apparatus of claim 1, wherein the luminance correction information according to a degree of separation from the center includes luminance difference information,
wherein the luminance difference information includes a ratio of a luminance correction value of an edge region of the display group to a luminance correction value of a center region of the display group, and
wherein the at least one processor is configured to:
based on information on current power consumption of the display group being obtained, compare the current power consumption with a preset power value;
based on the current power consumption being less than the preset power value, set the ratio to be equal to or greater than a preset ratio value; and
based on the current power consumption being equal to or greater than the preset power value, set the ratio to be less than the preset ratio value.

7. The electronic apparatus of claim 1, wherein the at least one processor is configured to:
based on information on an occurrence position of a major event within an entire image displayed by the display group being obtained, obtain the center information based on the shape information and the information on the occurrence position of the major event and store the center information in the memory.

8. The electronic apparatus of claim 1, wherein the at least one processor is configured to:
based on gaze tracking information of a user with respect to an entire image displayed by the display group being obtained, obtain the center information based on the shape information and the gaze tracking information and store the center information in the memory.

9. The electronic apparatus of claim 1, wherein the luminance correction information includes a first luminance correction function in which the luminance correction value linearly decreases as a degree of separation from the center increases, and a second luminance correction function in which the luminance correction value non-linearly decreases as the degree of separation from the center increases.

10. The electronic apparatus of claim 1, wherein the display apparatus includes a plurality of display modules, and
wherein each of the plurality of display modules includes a plurality of LED elements.

11. A method of controlling an electronic apparatus connected to one display apparatus included in a display group, the method comprising:
based on shape information and overall resolution information of the display group being obtained, obtaining center information to be applied to the display apparatus based on the shape information and the overall resolution information;
based on location information of the display apparatus being obtained, calculating, for each of a plurality of pixels included in the display apparatus, a degree of separation from a center based on the location information and the center information;
identifying a luminance correction value for each of the plurality of pixels based on the calculated degree of separation from the center and luminance correction information;
correcting a luminance value included in an image signal to be provided to the display apparatus based on the luminance correction value to identify a corrected luminance value for each of the plurality of pixels; and
providing, to the display apparatus, an image signal including the corrected luminance value,
wherein the luminance correction information includes information on a luminance correction value according to a degree of separation from the center.

12. The method of claim 11, wherein the calculating a degree of separation from the center for each of the plurality of pixels comprises:
based on the shape information and the overall resolution information, generating a two-dimensional coordinate system having a position corresponding to a center point of the display group as an origin and having a pixel pitch as a unit length;
identifying coordinates of each of the plurality of pixels included in the display apparatus within the two-dimensional coordinate system based on location information of the display apparatus; and
calculating, for each of the plurality of pixels, a degree of separation from the center based on the coordinates of each of the plurality of pixels.

13. The method of claim 11, wherein the obtaining center information to be applied to the display apparatus comprises:
based on the display group operating in a multi-view mode displaying a plurality of images, obtaining location information and resolution information of at least one external display apparatus displaying, within the display group, the same image as an image displayed by the display apparatus;
identifying an overall shape of a display set (cluster) for displaying the one image based on the location information and the resolution information of the at least one external display apparatus; and
obtaining the center information based on the identified overall shape of the display set.

14. The method of claim 11, wherein the luminance correction information includes information on a change rate of luminance correction values for respective regions within the display group, and
wherein the method comprises:
identifying an overall shape of the display group based on shape information of the display group;
identifying a change rate of the luminance correction values for the respective regions corresponding to the overall shape; and
storing information on the identified change rate of the luminance correction values for the respective regions.

15. The method of claim 14, comprising:
based on the overall shape of the display group being a rectangle having a horizontal length greater than a vertical length, setting a change rate of luminance correction values in a horizontal direction to be smaller than a change rate of luminance correction values in a vertical direction,
wherein the change rate of the luminance correction values in the horizontal direction includes information on a change in luminance correction values of pixels included between the center region and a horizontal edge region of the display group, and
wherein the change rate of the luminance correction values in the vertical direction includes information on a change in luminance correction values of pixels included between the center region and a vertical edge region of the display group.
